# EUROPÄISCHE PATENTSCHRIFT

(11) **EP 2 520 991 B1**
(45) Veröffentlichungstag und Bekanntmachung des Hinweises auf die Patenterteilung: **19.03.2014**
(21) Anmeldenummer: 11164402.7
(22) Anmeldetag: 02.05.2011
(51) Int. Cl.: G05B 19/042

(54) **Verfahren zum steuernden Eingriff in das Verhalten eines Submoduls**
Method for controlled intervention into the behaviour of a sub-module
Procédé d'accès commandé au comportement d'un sous-module

(43) Veröffentlichungstag der Anmeldung: 07.11.2012
(73) Patentinhaber: Siemens Aktiengesellschaft, 80333 München (DE)
(72) Erfinder: Prieler, Siegfried, 86660, Tapfheim (DE); Röhle, Holger, 09235, Burkhardtsdorf (DE)

(56) Entgegenhaltungen:
- EP-A1- 2 187 281
- DE-A1-102007 025 892
- DE-A1-102009 047 804
- PI: "Increasing the Energy Efficiency of Automation Systems using Smart Energy Management over PROFINET", THE PROFIENERGY PROFILE, März 2010 (2010-03), XP000002658889, Karlsruhe, Germany
- Peter Klueger, Peter Wenzel: "Was bringt das PROFI-Energy-Profil der PNO?", , 14. April 2009 (2009-04-14), XP000002658890, Gefunden im Internet: URL:http://www.computer-automation.de/feld ebene/vernetzung/news/article/71654/1/Was_ bringt_das_PROFIEnergy-Profil_der_PNO/ [gefunden am 2011-09-07]
- SIEMENS: "Saving Energy with SIMATIC S7, PROFIenergy with ET200S", , August 2010 (2010-08), XP000002658891, Gefunden im Internet: URL:http://cache.automation.siemens.com/dn l/zA/zAxNTk5MwAA_41986454_Tools/41986454_P ROFIenergy_ET200S_DOKU_V10_en.pdf [gefunden am 2011-09-07]
- SIEMENS: 'PROFINET System Description' 31 Juli 2010, XP055065061

## Beschreibung

Die Erfindung betrifft ein Verfahren zum steuernden Eingriff in das Verhalten eines Submoduls, wobei ein für eine Modellierung und den anschließenden Betrieb eines Automatisierungssystems ein Gerätemodell, umfassend ein Ein-/Ausgabegerät, mindestens ein erstes Modul, welches wiederum mindestens ein Submodul aufweist, und ein erster Controller verwendet wird, wobei dem Gerätemodell und dem ersten Controller Verschaltungsinformationen übergeben werden, welche eine Zuordnung zwischen dem ersten Controller und dem/den Submodul(en) festlegt.

Die genannte Modellierung des Gerätemodells findet beispielsweise in der Profinet-Norm (IEC 61585/IEC 61784) Anwendung. Hier sind die Gerätetypen Controller und I/O-Device, wobei das I/O-Device dem Ein-/Ausgabegerät entspricht, spezifiziert.

Das Gerätemodell für I/O-Devices besteht demnach aus den Objekten: I/O-Device Modulen und Submodulen. Ein Submodul besitzt laut Profinet-Spezifikation folgende Schnittstellen: eine E/A-Schnittstelle für zyklischen Datenaustausch, eine Datensatz-Schnittstelle für azyklischen Datenaustausch und eine Alarm-Schnittstelle für ereignisgesteuerten Datenaustausch. Die Profinet-Spezifikation sieht vor, dass ein Submodul mit Schnittstellen eindeutig einem Controller zugeordnet wird. Es ist auch zulässig, die Submodule eines I/O-Devices auf mehrere Controller aufzuteilen. Die Zuordnung von Submodulen eines I/O-Devices auf mehrere Controller wird "Shared Device" genannt.

In Shared Devices sind Submodule eindeutig einem Controller zugeordnet und nur eine Applikation dieses Controllers kann die zugeordneten Submodule steuern. Ein I/O-Management, also eine Vorschrift, wie die Ein-/Ausgänge eines I/O-Devices zu steuern sind, wird von diesen Controllern wahrgenommen. '

Möchte man nun ein Energiemanagement einsetzen, beispielsweise **P**rofi **E**nergy (PE), im Folgenden als PE-Management genannt, wird ein weiterer Controller eingesetzt, welcher das Energie-management für das I/O-Device übernimmt. Das PE-Management soll dann das gesamte I/O-Device oder Teile davon in einen Energiesparmodus setzen und wieder zurücksetzen können. Die Anforderung, dass ein Controller das Energiemanagement (PE-Management) für das gesamte I/O-Device, parallel zum I/O-Management, übernimmt, ist bislang nicht möglich. Dies erfordert nämlich einen Wechsel der Zuordnung von Submodul zu Controller. Damit wird eine neue Konfiguration und Parametrierung der Submodule notwendig.

Mit der Offenlegungsschrift EP 2 187 281 A1 wurde bereits ein Automatisierungsgerät und ein Verfahren zu dessen Betrieb veröffentlicht. Ziel der Erfindung nach der EP 2 187 281 A1 ist es, möglichst viele Komponenten abzuschalten um Energie zu sparen. Ein Betrieb eines Ein-/Ausgabegerätes nach der Profinet-Norm wird hier nicht angesprochen.

In dem Dokument PI: "Increasing the Energy Efficiency of Automation Systems using Smart Energy Management over PROFINET", THE PROFIENERGY PROFILE, March 2010 (2010-03), XP000002658889, Karlsruhe, Germany, Chapter 1, 4, 6, 8 wird das bereits erwähnte Energiemanagement nach Profi Energy diskutiert.

Mit der Internetveröffentlichung Peter Klueger, Peter Wenzel: "Was bringt das PROFI-Energy-Profil der PNO?", 14. April 2009 (2009-04-14), XP000002658890, URL:http://www.computer-auto-mation.de/feldebene/vernetzung/news/article/71654/1/Was_bring t_das_PROFIEnergy-Profil_der_PNO/, werden unterschiedliche Betriebsmodi eines zukünftigen Prof-Energy-Management angesprochen.

Die Veröffentlichung SIEMENS: "Saving Energy with SIMATIC S7, PROFIenergy with ET200S", August 2010 (2010-08), XP000002658891, Kapitel 3.1, 4, zeigt Lösungsansätze zur Energieeinsparung mit PROFIenergy basierend auf PROFINET Mechanismen auf.

Es ist daher die Aufgabe der Erfindung, ein Verfahren bereit zu stellen, welches es ermöglicht, ein I/O-Management parallel zu einem PE-Management für ein Shared Device einsetzen zu können, ohne dass eine neue Konfiguration und Parametrierung der Submodule notwendig ist.

Die Aufgabe wird für das eingangs genannte Verfahren zum steuernden Eingriff in das Verhalten eines Submoduls durch die Merkmale des Anspruchs 1 gelöst. Mit Hilfe des zusätzlich eingeführten Steuer-Controllers und des zusätzlichen Steuer-Moduls ist eine universelle Schnittstelle zwischen den Modulen und Submodulen zu einem weiteren Controller bereitgestellt worden. Es wurde also ein Weg geschaffen, von einem weiteren Controller aus steuernd in das Verhalten der Submodule einzugreifen, wenn diese nach dem Profinet-Standard für Shared Devices aufgebaut sind.

Auf vorteilhafte Weise wird das Verfahren derart angewendet, dass das geänderte Verhalten auf eine Ein-/Ausgabe-Schnittstelle in den Submodulen wirkt und diese zum Einnehmen oder Verlassen eines Energie-Sparmodus veranlasst wird. Obwohl Profinet eine eindeutige Zuordnung von Controller zu Submodulen vorschreibt (spezifiziert) und Submodule ihre Daten (zyklische E/A-Daten, azyklische Datensätze, ereignisgesteuerte Alarme) nur mit diesem zugeordneten Controller austauschen können, ist es jetzt möglich, über den Steuer-Controller, welcher als ein Energie-Management Controller ausgestaltet ist, den weiteren Submodulen Steuerbefehle, Kommandos oder Profi-Energie-Kommandos (Start_Pause, End_Pause) zu übermitteln. Anhand der ebenfalls übermittelten Verhaltenskennung können die Submodule mit Hilfe der Verhaltenskennung und der zusätzlichen Kommandos entscheiden, ihr Verhalten zu ändern, beispielsweise in einen Engergie-Sparmodus überzugehen.

Für die Automatisierungstechnik von Vorteil ist es, wenn ein Feldbus der Automatisierungstechnik auf das Ein-/Ausgabegerät durch die Modellierung abgebildet wird. Ein Feldbus kann beispielsweise ein Profibus oder ein Profinet sein.

Wird das Gerätemodell nach Profinet-Spezifikation betrieben, so bietet das Verfahren den Vorteil, dass bei einem zusätzlichen Einsatz eines PE-Management zu dem I/O-Management die Submodule nicht umkonfiguriert werden müssen, und ein manueller Eingriff wegfällt. Die sonst üblicherweise neue Konfiguration muss nun nicht mehr über ein Engineering-System in den Controller geladen werden, bevor dieser die neuen Zuordnungen etablieren kann.

Bei der Anwendung in der Automatisierungstechnik zum Steuern und Automatisieren von industriellen Prozessen, ist es besonders vorteilhaft, wenn der erste Controller als ein Ein-/Ausgabe-Controller in Form einer speicherprogrammierbaren Steuerung betrieben wird.

Ist das Ein-/Ausgabegerät mit einem Rückwandbus aufgebaut, so ist es vorteilhaft, wenn in dem Ein-/Ausgabegerät der Rückwandbus, derart betrieben wird, das über ein Broadcast-Kommando von dem Steuer-Controller an alle Submodule ein Befehl für eine entsprechende Verhaltensänderung gesendet wird.

Bei der Ausgestaltung mit dem Broadcast-Kommando ist es besonders vorteilhaft, wenn in den Steuer-Submodulen Zugangspunkte eingerichtet werden, über die der Steuer-Controller die Steuer-Submodule anspricht. Vorzugsweise wird dann ein Rückwandbus spezifischer Broadcast-Dienst unter Zuhilfenahme des Zugangspunktes und der Verhaltenskennung aktiviert, so dass der Zugangspunkt und die Verhaltenskennung an alle Submodule übermittelt werden.

Vorzugsweise greift ein zweiter Controller gemeinsam mit dem ersten Controller auf das Ein-/Ausgabegerät zu. Damit ist verfahrensgemäß ein "Shared Device" realisiert. Dieses Vorgehen spart Kosten, da E/A-Punkte für unterschiedliche Controller in einem I/O-Device zusammengefasst werden können.

Anhand der Zeichnung wird ein Ausführungsbeispiel näher erläutert, es zeigen
- FIG 1: eine prinzipielle Funktionsweise der Verhaltenskennung und eines Broadcast-Dienstes, und
- FIG 2: ein Submodul mit seinen Schnittstellen.

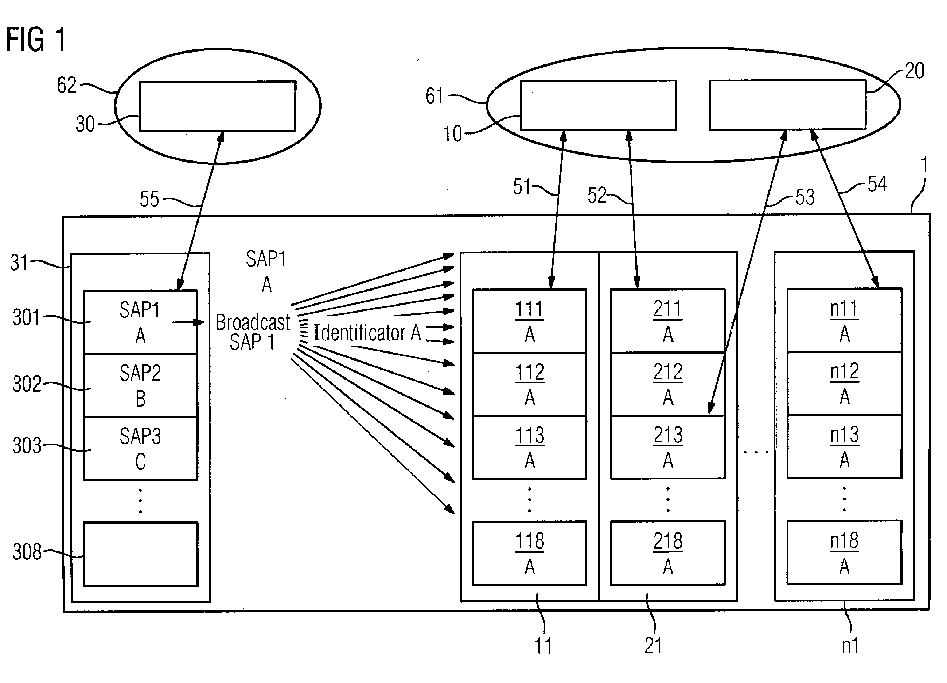

Gemäß FIG 1 ist ein Ein-/Ausgabegerät 1 mit einem ersten Modul 11, einem zweiten Modul 21, bis zu einem nten-Modul n1 dargestellt. Die Module 11 bis n1 weisen jeweils Submodule 111 bis n18 auf. Am Beispiel des ersten Moduls 11 umfasst dieses ein erstes Submodul 111, ein zweites Submodul 112, ein drittes Submodul 113, bis ein achtes Submodul 118.

Das Ein-/Ausgabegerät 1 steht über Kommunikationsbeziehungen mit übergeordneten Controllern in Verbindung, wobei ein erster Controller 10 und ein zweiter Controller 20 ein I/O-Management 61 und ein Steuer-Controller 30 ein PE-Management 62, also ein Energiemanagement, übernehmen. Der erste Controller 10 steht über eine erste Kommunikationsbeziehung 51 mit dem ersten Modul 11 und über eine weitere zweite Kommunikationsbeziehung 52 mit dem zweiten Modul 21 in Verbindung. Da das Ein-/Ausgabegerät 1 als ein Shared Device aufgebaut ist, gibt es von dem zweiten Controller 20 eine dritte Kommunikationsbeziehung 53 zu einem Teil von Submodulen des zweiten Moduls 21, nämlich den Submodulen 213 bis 218. Eine vierte Kommunikationsbeziehung 54 besteht zwischen dem zweiten Controller 20 und allen Submodulen n11 bis n18 des nten Moduls 2n.

Zwischen dem Steuer-Controller 30 und dem Steuer-Modul 31 besteht eine fünfte Kommunikationsbeziehung 55 zur Ausführung des PE-Managments 62. Dieser zusätzliche Steuer-Controller 30 und das zusätzliche Steuer-Modul 31 werden nun für ein Energiemanagement des Ein-/Ausgabegerätes 1 eingesetzt, sie können aber auch allgemeingültig als eine universelle Schnittstelle zu den Modulen des Ein-/Ausgabegerätes 1 eingesetzt werden. Das Steuer-Modul 31 weist ein erstes Steuer-Submodul 301, ein zweites Steuer-Submodul 302, ein drittes Steuer-Submodul 303 bis ein achtes Steuer-Submodul 308 auf. Für den Einsatz des Verfahrens zum steuernden Eingriff in das Verhalten der Submodule ist das Steuer-Submodul 301 mit einer Verhaltenskennung A parametriert, das zweite Steuer-Submodul 302 ist mit einer Verhaltenskennung B und das dritte Steuer-Submodul 301 ist mit einer Verhaltenskennung C parametriert. In dieser Ausführung des Beispiels weisen alle Submodule 111 bis n18 ebenfalls die Verhaltenskennung A als Identifikator A auf. Die Verhaltenskennung A in den Submodulen 111 bis n18 korrespondiert mit der Verhaltenskennung A in dem ersten Steuersubmodul 301.

Für einen steuernden Eingriff in das Verhalten der Submodule 111 bis n18 mit der Verhaltenskennung A wird das erste Steuer-Submodul 301 von dem Steuer-Controller 30 angesprochen, wobei daraufhin durch das angesprochene erste Steuer-Submodul 301 einen Steuerbefehl mit der bestimmten Verhaltenskennung a an alle anderen Submodule 111 bis n18 abgesetzt wird, wobei die Submodule mit der Verhaltenskennung A veranlasst werden, aufgrund einer mitgesendeten Verhaltensinformation, ein geändertes Verhalten einzunehmen.

Ein verändertes Verhalten kann beispielsweise ein Profi-Energiebefehl, wie "Start Pause" oder "End_Pause" sein. Vorzugsweise weisen die Steuer-Submodule Zugangspunkte auf, welche auch als ein Service Acess Point bezeichnet werden können. So weist das erste Steuer-Submodul 301 einen ersten Zugangspunkt SAP1, das zweite Steuer-Submodul 302 einen zweiten Zugangspunkt SAP2 und das dritte Steuer-Submodul 303 einen dritten Zugangspunkt SAP3 auf. Das Ein-/Ausgabegerät 1 weist einen Rückwandbus auf, über den ein Broadcast-Kommando als Befehl gesendet wird. Der Steuer-Controller 30 veranlasst über die fünfte Kommunikationsbeziehung 55 das erste Steuer-Submodul 301 mit dem ersten Zugangspunkt SAP1 eine Broadcast-Aussendung mit der Verhaltenskennung A. Alle Submodule 111 bis n18, welche die Verhaltenskennung A, also den Identifikator A, aufweisen, werden nun über das PE-Management 62 gesteuert und können von einem zuvor herrschenden Ein-/Ausgabezustand in einen Energiesparmodus wechseln.

Der für das Energiemanagement zuständige Steuer-Controller 30 kann also über mehrere Zugangspunkte SAP1, SAP2 und SAP3 für eine Profi-Energieanwendung bzw. ein PE-Management 62 das Verhalten von I/O-Submodulen für einen Energiesparmodus beeinflussen. Das Einrichten der Zugangspunkte und die Parametrierung der Submodule mit ihren Verhaltenskennungen kann mit standardisierten Protokolldiensten von Profinet durchgeführt werden. Der Rückwand spezifische Broadcast-Dienst und der Zugangspunkt mit seiner Verhaltenskennung stellt eine erfolgreiche Trennung eines PE-Management 62 zu einem I/O-Management 61 dar und lässt sich insbesondere bei Shared Devices mit Vorteil einsetzen.

Durch die Erfindung können nun das I/O-Management 61 und das PE-Management 62 nebeneinander agieren. Da in Shared Devices die Submodule eindeutig einem Controller zugeordnet sind, und nur die Applikation dieses Controllers das/die Submodul(e) steuern können, konnte ein Energiemanagement-Controller zuvor nicht eingesetzt werden.

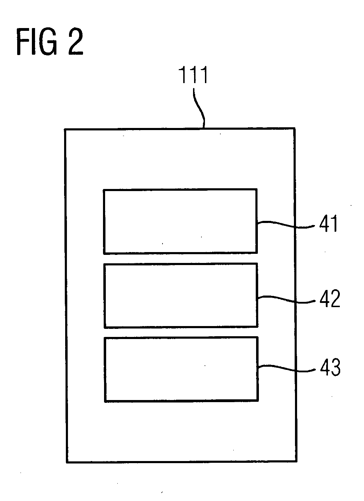

Gemäß FIG 2 ist am Beispiel des ersten Submoduls 111 eine Schnittstellenaufteilung des Submoduls 111 dargestellt. Zyklische E/A-Daten können über eine Ein-/Ausgabeschnittstelle 41 ausgetauscht werden. Ereignisgesteuerte Alarme können über eine Alarmschnittstelle 42 gesendet werden und azyklische Datensätze können über eine Data-Record-Schnittstelle 43 abgesetzt werden.

## Patentansprüche

1. Verfahren zum steuernden Eingriff in das Verhalten eines Submoduls (111, ..., 118), wobei für eine Modellierung und den anschließenden Betrieb eines Automatisierungssystems ein Gerätemodell nach der Profinet-Norm genutzt wird, umfassend
- ein Ein-/Ausgabegerät (1),
- mindestens ein erstes Modul (11,...,n1), welches wiederum
- mindestens ein Submodul (111) aufweist,
und ein erster Controller (10) verwendet wird, wobei dem Gerätemodell und dem ersten Controller (10) Verschaltungsinformationen übergeben werden, welche eine Zuordnung zwischen dem ersten Controller (10) und dem/den Submodul(en) (111) festlegt, wobei ein zweiter Controller (20) gemeinsam mit dem ersten Controller (10) auf das Ein-/Ausgabegerät (1) zugreift, wobei das Ein-/Ausgabegerät (1) als ein Shared Device nach der Profinet-Norm für Shared Device aufgebaut ist,
**dadurch gekennzeichnet, dass** zusätzlich
- ein Steuer-Controller (30) und ein Steuer-Modul (31) eingesetzt wird, wobei das Steuer-Modul (31) mindestens ein Steuer-Submodul (301) aufweist, und zusätzlich
- zu den Verschaltungsinformationen den Submodulen (111,..., 118) eine Verhaltenskennung (A,B,C) und eine Verhaltensinformation übergeben wird, wobei
- die Verhaltenskennung (A,B,C) in den Submodulen (111,..., 118) mit einer Verhaltenskennung in dem Steuer-Submodul (301,...,308) korrespondiert, und für
- einen steuernden Eingriff in das/die Submodul(e) (111,..., 118) mit einer bestimmten Verhaltenskennung (A,B,C), das jeweilige Steuer-Submodul (301,...,308) von dem Steuer-Controller (30) angesprochen wird, dabei wird der Steuer-Controller (30) und das Steuer-Modul (31) für ein Energiemanagement des Ein-/Ausgabegerätes (1) eingesetzt,
- wobei daraufhin das angesprochene Steuer-Submodul (301,..., 308) einen Steuerbefehl mit seiner bestimmten Verhaltenskennung (A,B,C) an alle anderen Submodule absetzt, wobei die Submodule mit der bestimmten Verhaltenskennung (A,B,C) veranlasst werden aufgrund der Verhaltensinformation ein geändertes Verhalten einzunehmen, wobei durch das Steuer-Modul (31) eine Schnittstelle zwischen den Modulen (11, ..., n1) und den Submodulen (111,...,n18) zu dem Steuer-Controller (30) bereitgestellt wird.

2. Verfahren nach Anspruch 1, wobei das geänderte Verhalten auf eine Ein-Ausgabe-Schnittstelle (41) in den Submodulen (111) wirkt und diese zum Einnehmen oder Verlassen eines Energiesparmodus veranlasst wird.

3. Verfahren nach Anspruch 1 oder 2, wobei ein Feldbus der Automatisierungstechnik auf das Ein-/Ausgabegerät (1) durch die Modellierung abgebildet wird.

4. Verfahren nach einem der Ansprüche 1 bis 3, wobei der Steuer-Controller (30) als ein Energiemanagement-Controller betrieben wird.

5. Verfahren nach einem der Ansprüche 1 bis 4, wobei der erste Controller (10) als ein Ein/-Ausgabe-Controller in Form einer speicherprogrammierbaren Steuerung betrieben wird.

6. Verfahren nach einem der Ansprüche 1 bis 5, wobei in dem Ein-/Ausgabegerät (1) ein Rückwandbus betrieben wird, über den ein Broadcast-Kommando von dem Steuer-Controller (30) an alle Submodule (111,...,118) als ein Befehl für eine entsprechende Verhaltensänderung gesendet wird.

7. Verfahren nach Anspruch 1 bis 6, wobei in den Steuer-Submodulen (301,...,308) Zugangspunkte (SAP1,SAP2,SAP3) eingerichtet werden, über die der Steuer-Controller (30) die Steuer-Submodule (301,...,308) anspricht.

## Claims

1. Method for controlling intervention in the behaviour of a submodule (111,...,118), wherein use is made of a device model according to the Profinet standard for modelling and subsequent operation of an automation system, said device model comprising
- an input/output device (1),
- at least one first module (11,...,n1), which in turn has
- at least one submodule (111),
and a first controller (10) is used, wherein the device model and the first controller (10) are passed interconnection information which defines an assignment between the first controller (10) and the submodule(s) (111), wherein a second controller (20) accesses the input/output device (1) jointly with the first controller (10), wherein the input/output device (1) is implemented as a shared device according to the Profinet standard for shared devices,
**characterised in that** in addition
- a supervisory controller (30) and a control module (31) are used, wherein the control module (31) has at least one control submodule (301), and
- the submodules (111,...,118) are passed a behaviour identification code (A,B,C) and behaviour information in addition to the interconnection information, wherein
- the behaviour identification code (A,B,C) in the submodules (111,...,118) corresponds to a behaviour identification code in the control submodule (301,...,308), and for the purpose of
- a controlling intervention in the submodule(s) (111,...,118) having a specific behaviour identification code (A,B,C), the respective control submodule (301,...,308) is addressed by the supervisory controller (30), with the supervisory controller (30) and the control module (31) being used for energy management of the input/output device (1),
- wherein the addressed control submodule (301,...,308) thereupon issues a control command containing its specific behaviour identification code (A,B,C) to all the other submodules, wherein the submodules having the specific behaviour identification code (A,B,C) are induced to adopt a change in behaviour on the basis of the behaviour information, wherein an interface between the modules (11,...,n1) and the submodules (111,...,n18) to the supervisory controller (30) is provided by the control module (31).

2. Method according to claim 1, wherein the modified behaviour acts on an input/output interface (41) in the submodules (111) and the latter are induced to assume or exit an energy-saving mode.

3. Method according to claim 1 or 2, wherein a fieldbus of the automation system is mapped onto the input/output device (1) by means of the modelling.

4. Method according to one of claims 1 to 3, wherein the supervisory controller (30) is operated as an energy management controller.

5. Method according to one of claims 1 to 4, wherein the first controller (10) is operated as an input/output controller in the form of a programmable logic controller.

6. Method according to one of claims 1 to 5, wherein a backplane bus is operated in the input/output device (1), via which backplane bus a broadcast command is sent by the supervisory controller (30) to all the submodules (111,...,118) as an instruction for initiating a corresponding change in behaviour.

7. Method according to one of claims 1 to 6, wherein access points (SAP1,SAP2,SAP3) via which the supervisory controller (30) addresses the control submodules (301,...,308) are set up in the control submodules (301,...,308).

## Revendications

1. Procédé d'intervention commandée dans le comportement d'un sous-module ( 111, ..., 118 ), dans lequel on utilise, pour une modélisation et le fonctionnement s'ensuivant d'un système d'automatisation, un modèle d'appareil suivant la norme Profinet, comprenant
- un appareil ( 1 ) d'entrée / sortie,
- au moins un premier module ( 11, ..., n1 ), qui a, à son tour,
- au moins un sous-module ( 111 ),
et qui utilise une première unité ( 10 ) de commande, des informations de connexion qui fixent une association entre la première unité ( 10 ) de commande et le/les sous-module( s ) ( 111 ) étant transmises au modèle d'appareil et/ou à la première unité ( 10 ) de commande, une deuxième unité ( 20 ) de commande accédant, ensemble avec la première unité ( 10 ) de commande, à l'appareil ( 1 ) d'entrée / sortie, l'appareil ( 1 ) d'entrée / sortie étant constitué en shared device suivant la norme Profinet pour un shared device,
**caractérisé en ce qu'**en outre
- on utilise une unité ( 30 ) de commande et un module ( 31 ) de commande, le module ( 31 ) de commande ayant au moins un sous-module ( 301 ) de commande et, en plus
- des informations de connexion, on transmet au sous-module ( 111, ..., 118 ) une caractérisation ( A, B, C ) de comportement et une information de comportement, dans lequel
- la caractérisation ( A, B, C ) de comportement dans les sous-modules ( 111, ..., 118 ) correspond à une caractérisation de comportement dans le sous-module ( 301, ..., 308 ) de commande et, pour
- une intervention commandée dans le/les sous-module( s ) ( 111, ..., 118 ) ayant une caractérisation ( A, B, C ) de comportement déterminée, le sous-module ( 301, ..., 308 ) de commande respectif est déclenché par l'unité ( 30 ) de commande, l'unité ( 30 ) de commande et le module ( 31 ) de commande étant utilisés pour une gestion d'énergie de l'appareil ( 1 ) d'entrée / sortie,
- dans lequel ensuite, le sous-module ( 301, ..., 308 ) de commande déclenché émet, vers tous les autres sous-modules, une instruction de commande avec sa caractérisation ( A, B, C ) de comportement déterminée, les sous-modules déclenchés par la caractérisation ( A, B, C ) de comportement déterminée prenant, en raison de l'information de comportement, un comportement modifié, dans lequel il est mis à disposition, par le module ( 31 ) de commande, une interface entre les modules ( 11, ..., n1 ) et les sous-modules ( 111, ..., n18 ) vers l'unité ( 30 ) de commande.

2. Procédé suivant la revendication 1, dans lequel le comportement modifié agit sur une interface ( 41 ) d'entrée-sortie dans les sous-modules ( 111 ) et faisant que celle-ci prend ou quitte un mode d'économie d'énergie.

3. Procédé suivant la revendication 1 ou 2, dans lequel un bus de champ de la technique d'automatisation est reproduit sur l'appareil ( 1 ) d'entrée / sortie par la modélisation.

4. Procédé suivant l'une des revendications 1 à 3, dans lequel l'unité ( 30 ) de commande fonctionne en unité de commande de gestion d'énergie.

5. Procédé suivant l'une des revendications 1 à 4, dans lequel la première unité ( 10 ) de commande fonctionne en unité de commande d'entrée / sortie, sous la forme d'un automate programmable.

6. Procédé suivant l'une des revendications 1 à 5, dans lequel, dans l'appareil ( 1 ) d'entrée / sortie, fonctionne un bus d'arrière par lequel une instruction broadcast est envoyée, comme instruction, pour une modification correspondante de comportement de l'unité ( 30 ) de commande à tous les sous-modules ( 111, ..., 118 ).

7. Procédé suivant l'une des revendications 1 à 6, dans lequel il est installé dans les sous-modules ( 301, ..., 308 ) de commande, des points ( SAP1, SAP2, SAP3 ) d'accès, par lesquels le dispositif ( 30 ) de commande déclenche les sous-modules ( 301 à 308 ) de commande.
